# EUROPEAN PATENT SPECIFICATION

(11) **EP 4 627 461 B1**
(45) Date of publication and mention of the grant of the patent: **09.09.2026**
(21) Application number: 23809208.4
(22) Date of filing: 17.11.2023
(51) Int. Cl.: G06F 21/53, H04L 9/08, G06F 21/60, G06F 9/455, G06F 8/61, G06F 9/4401

(54) **UPDATING SECURE GUEST METADATA OF A SPECIFIC GUEST INSTANCE**
AKTUALISIERUNG SICHERER GASTMETADATEN EINER SPEZIFISCHEN GASTINSTANZ
MISE À JOUR DE MÉTADONNÉES D'INVITÉ SÉCURISÉES D'UNE INSTANCE D'INVITÉ SPÉCIFIQUE

(30) Priority: 29.11.2022 GB 202217882; 01.02.2023 US 202318162734
(43) Date of publication of application: 08.10.2025
(73) Proprietor: International Business Machines Corporation, Armonk, New York 10504 (US)
(72) Inventor: BUENDGEN, Reinhard, 71032 Boeblingen (DE); MIHAJLOVSKI, Viktor, 71032 Boeblingen (DE); BRADBURY, Jonathan, Poughkeepsie, NY 12601 (US)
(74) Representative: IBM Deutschland GmbH
(86) International application number: PCT/EP2023/082301
(87) International publication number: WO 2024/115152

(56) References cited:
- US-A1- 2018 183 578
- US-A1- 2021 271 504
- US-B1- 9 110 732

## Description

### BACKGROUND

### Field of the Invention

The invention relates generally to a method for personalizing a secure guest instance from a generic boot image, and more specifically, to a computer-implemented method for personalizing a secure guest instance from a generic boot image using a trusted firmware that maintains metadata of the secure guest instance. The invention relates further to a related security system for personalizing a secure guest instance from a generic boot image using a trusted firmware that maintains metadata of the secure guest instance, and a computer program product.

### Related Art

The security of data and communication channels still continues to have one of the highest priorities for the management of corporate IT (information technology). This is not only necessary due to government regulations (e.g., GDPR, EU General Data Protection Regulation), but also because of the loss of credibility with companies that cannot reliably protect customer data at all times - and avoid losing revenue and profits - in the event of compromised customer data records. Additionally, fines may have to be paid depending on the country of the data breach. It turns out that data protection and the provision of secure computing platforms is not just a software issue, it also involves hardware modules. This may not yet be a natural environment for mass-market CPU-chips used in microcontrollers, personal computers, mobile phones or home automation devices. However, for highly trusted enterprise-class computing environments, such as those used in the financial, insurance, or government industries, it is essential to be able to demonstrate that, from a technological perspective, data breaches have a very high probability of being prevented. This may require some additional high-tech components and supporting processes. However, the associated success in terms of data security pays off for the additional effort.

These thoughts are also applicable to trusted and/or confidential computing environments in which cryptographic keys used by virtual machines (also denoted as guests) or software containers running on/in hypervisors can practically not be accessed by the hypervisor or related software management and configuration programs. Nevertheless, also in such computing environments breaches of the fundamental security rules, such as an exposure of a secret key or usage of a secret key for a secure guest image through the hypervisor, continue to be possible. This may also be possible in environments in which hardware security modules (HSMs) have been in use for quite some time.

There are already some disclosures that fit into the context of the computer-implemented method for personalizing a secure guest instance from a generic boot image using a trusted firmware that maintains metadata of the secure guest instance. Document US 2020 / 0 076 607 A1 describes how a secret is securely maintained on a virtual computer system by configuring a specialized virtual machine to manage and maintain the sequent on behalf of an application. When the application requests access to the secret, a controlling domain, in combination with the specialized virtual machine, validates that the application is authorized to make the request and that the application was not compromised prior to the request. US 9110732 B1 discloses a proxy operating inside of a virtual machine that is responsible for receiving user-specified configuration information, such as credentials, and updating the configuration of the virtual machine with the user-specified values at the time of assigning the virtual machine to a user. US 2021/0271504 A1 discloses a method and system for efficient virtual machine operation while recovering data. Specifically, the disclosed method and system enable the activation of virtual machines while virtual machine data, pertinent to the virtual machines, may concurrently be undergoing restoration. US 2018/0183578 A1 discloses a secure key manager enclave is provided on a host computing system to send an attestation quote to a secure key store system identifying attributes of the key manager enclave and signed by a hardware-based key of the host computing system to attest to trustworthiness of the secure key manager enclave.

Problems in such environments can be identified in the context of an image on the secure guest to be executed on a hypervisor. E.g., a user belonging to a generic secure guest and wants to modify metadata of the secure guest, where the metadata are only accessible by trusted firmware and the metadata pertains to the specific secure guest instance owned by the user. In such a situation, it must not be possible to steal the data comprising the secret, using the stolen data, and add the secret to a secure guest instance of an attacker; and an attacker must not be able to compile data comprising a secret known to the attacker that can be added to the metadata of a vulnerable secure guest. Technologies such as openCryptoki or CCA (Common Cryptographic Architecture) cannot yet elegantly meet this requirement.

Hence, there may be a need to provide a secure method between a virtual machine and the firmware such that the virtual machine and its metadata cannot be compromised in the just described way by an attacker.

### SUMMARY OF THE INVENTION

According to one aspect of the present invention, a computer-implemented method for personalizing a secure guest instance from a generic boot image using a trusted firmware that maintains metadata of the secure guest instance may be provided. The method may comprise passing a request structure from the secure guest instance to the trusted firmware for modifying the metadata of the secure guest instance and to establish at least one retrievable secret in the metadata of the secure guest instance that is specific to the secure guest instance and verifying, by the trusted firmware, the request structure and upon success modifying the metadata as specified by the request structure. The method may further comprise further retrieving, by the secure guest instance, a secret object derived from the retrievable secret from the trusted firmware, and using, by the secure guest instance, the retrieved secret object to personalize the secure guest instance.

According to another aspect of the present invention, a security system for personalizing a secure guest instance from a generic boot image using a trusted firmware that maintains metadata of the secure guest instance may be provided. The system may comprise one or more processors and a memory operatively coupled to the one or more processor, wherein the memory stores program code portions which, when executed by the one or more processors, enable the one or more processors to pass a request structure from the secure guest instance to the trusted firmware for modifying the metadata of the secure guest instance and to establish at least one retrievable secret in the metadata of the secure guest instance that is specific to the secure guest instance, and to verify, by the trusted firmware, the request structure and upon success modifying the metadata as specified by the request structure.

Additionally, the one or more processors may be enabled to retrieve, by the secure guest instance, a secret object derived from the retrievable secret from the trusted firmware, and to use, by the secure guest instance, the retrieved secret object to personalize the secure guest instance.

The proposed computer-implemented method for personalizing a secure guest instance from a generic boot image using a trusted firmware that maintains metadata of the secure guest instance may offer multiple advantages, technical effects, contributions and/or improvements:
The proposed concept, and in particular the subject-matter of the first claim, may have the potential to increase a security level in a computer system. **In** particular, an execution of a secure guest system may be made even more secure.

For instance, the proposed concept may define a technical barrier against a usage or misuse of metadata for a specific secure guest instance by another secure guest instance or any other process in the computer system in question.

Additionally, the proposed concept may also prohibit that a secure guest can use a request structure - e.g., to modify metadata in the firmware - of another secure guest to modify metadata maintained by the firmware of the computer system in an non-allowed manner. Hence, any cross usage between secure guest instances running on a hypervisor atop trusted firmware can be prohibited by design. The here proposed personalization of a secure guest may be instrumental for this level of security.

It may also enhance the security level of the underlying confidential computing environment in that also stolen keys or secrets cannot be used by unauthorized secure guest instances.

The proposed concept may also enable a secure personalization of a secure generic guest image provided by a software or appliance vendor such that the secure guest image does not need to contain any vendor secrets.

Furthermore, the proposed concept has also the advantage that the secrets used for the personalization do not need to be ever stored as plaintext values in the memory of the secure guest.

Another advantage may lie in the fact that the tenant of a guest may change the behavior of the trusted firmware in controlling the secure guest by changing controls in the metadata of the secure guest. E.g., it would become possible to switch off a possibility to dump a secure guest that was started as being dumpable.

It is possible to submit multiple requests to change metadata (including the addition of secrets) enforcing that all request where constructed form the same subject.

In the following, additional embodiments of the inventive concept - applicable for the method as well as for the system - will be described.

According to a preferred embodiment of the method, each request structure may be integrity protected such that the integrity of the request structure may be verified - in particular, only -by the trusted firmware. The integrity check may thus apply to the integrity of the request structure itself and its applicability to a certain secure guest image. The computation of cryptographic hashes, message authentication codes or digital signatures may be instrumental to verify the integrity.

According to an advantageous embodiment of the method, a request structure may comprise an image measurement value of the secure guest passing the request structure, and the trusted firmware may reject the passed or submitted request structure - in particular, passed or sent from the secure guest to the trusted firmware - if the measurement value of a boot image of the secure guest does not match the image measurement value. As an example, the measurement value may be the size of the generic boot image in number of bytes. Other measurement values, in particular cryptographically secure measurements (hashes, MACs, digital signatures), may also be possible.

According to a permissive embodiment of the method, the request structure may comprise a universal unique identifier (UUID) of the secure guest, and the trusted firmware may reject the request structure if the UUID of the secure guest passing the request structure does not match the UUID in the request structure. Because of the nature of the UUID, the security mechanism may represent a good protection against unauthorized access.

According to a useful embodiment of the method, the request structure may comprise encrypted data that is only decryptable by the trusted firmware. Such data may comprise cryptographic keys or other vulnerable data which shall be protected against unauthorized access.

According to an interesting embodiment of the method, the encrypted data of the request structure may comprise an extension secret, and the trusted firmware may reject any request structure received after a first request structure whose extension secret does not match the extension secret of the first request structure received. This protection method may add the time stamps or sequence numbers as additional security factor in order to ensure integrity over time and between different requests.

According to a permissive embodiment of the method, the data of the request structure may be encrypted and the modification of the metadata of the secure guest may comprise adding some of the encrypted data as the secret to the metadata. This way, the secure guest may add an encrypted data value to the metadata maintained by the trusted firmware, e.g., for later usage.

According to an advanced embodiment of the method, the trusted firmware may provide at least one cryptographic function operating on protected keys, where the secret object may be a protected key which may only be valid for use by the secure guest as an argument to one of the cryptographic functions. An example of protected keys may be the CPACF (Control Program Assist for Cryptographic Functions) protected keys of the IBM Z platform.

According to a further embodiment of the method, the secret comprised in the request structure to be added to the metadata of a secure guest instance may be markable as being retrievable such that the trusted firmware may return a secret object in response to a get-retrievable-secret request issued by a secure guest only if the secret is marked as retrievable. This may be seen as a second level of metadata by which specific metadata of the secure guest instance - e.g., the secret - may be tagged such that a way of usage may be predefined.

According to a further advantageous embodiment of the method, each retrievable secret in the request structure may be associated with a secret reference, and the retrieving the secret object associated with a secret reference from the trusted firmware may be fetched using a retrieval interface of the trusted firmware that takes the secret reference as input. This may represent one way of accessing specific data maintained by the trusted firmware from the perspective of the secure guest instance. Other access methods may also be acceptable.

According to another enhanced embodiment of the method, a request structure may comprise a description on how to modify the metadata of a secure guest. Also such kind of data may be seen as second level metadata. However, this technique may allow to control the behavior of the secure guest instance in the long run, e.g., by restricting the usage of the additional metadata.

According to one interesting embodiment of the method, the metadata may comprise controls that determine operations that are executable by the secure guest. Some examples of such operations may comprise allowing a core dump once of the execution of the secure guest image may crash or defining access to certain devices or exclude an access to certain other devices. In this way, fine grained-control over behavior options for the secure guest image are definable.

According to another interesting embodiment of the method, instead of the secure guest submitting a request structure, the request structure may be submitted to the firmware to modify the metadata of a secure guest instance that has been created but not yet started. Hence, a sort of master metadata for a plurality of instances of the secure guest may be pre-definable which may allow a reduction of time and effort for operational personnel.

Furthermore, embodiments may take the form of a related computer program product, accessible from a computer-usable or computer-readable medium providing program code for use, by, or in connection, with a computer or any instruction execution system. For the purpose of this description, a computer-usable or computer-readable medium may be any apparatus that may contain means for storing, communicating, propagating or transporting the program for use, by, or in connection, with the instruction execution system, apparatus, or device.

### BRIEF DESCRIPTION OF THE DRAWINGS

It should be noted that embodiments of the invention are described with reference to different subject-matters. In particular, some embodiments are described with reference to method type claims, whereas other embodiments are described with reference to apparatus type claims. However, a person skilled in the art will gather from the above and the following description that, unless otherwise notified, in addition to any combination of features belonging to one type of subject - matter, also any combination between features relating to different subject - matters, in particular, between features of the method type claims, and features of the apparatus type claims, is considered as to be disclosed within this document.

The aspects defined above and further aspects of the present invention are apparent from the examples of embodiments to be described hereinafter and are explained with reference to the examples of embodiments, to which the invention is not limited.

Preferred embodiments of the invention will be described, by way of example only, and with reference to the following drawings:
Fig. 1 shows a flowchart of an embodiment of the inventive computer-implemented method for personalizing a secure guest instance from a generic boot image using a trusted firmware that maintains metadata of the secure guest instance.
Fig. 2 shows a block diagram of constituents of a scenario of potential security attacks.
Fig. 3 shows a block diagram of an embodiment comprising components instrumental for the concept proposed here.
Fig. 4 shows a flowchart more implementation-near sequence of activities for the concept proposed here.
Fig. 5 shows an embodiment of a get-secret-request structure according to an embodiment.
Fig. 6 shows a block diagram of an embodiment of the inventive security system for personalizing a secure guest instance from a generic boot image using a trusted firmware that maintains metadata of the secure guest instance.
Fig. 7 shows an embodiment of a computing system comprising the system according to Fig. 6.

### DETAILED DESCRIPTION

In the context of this description, the following technical conventions, terms and/or expressions may be used:
The term 'secure guest' may denote a virtual machine or a software container comprising executable program code in a secure computing environment that is protected by a trusted execution environment such that no non-trusted component of a computer system can observe any state (memory or registers) of the running secure guest. It may be a generic guest image which may, e.g., be also provided by a third party, e.g., a software house. Typical non-trusted components are software hypervisors, hardware management consoles and other guests.
The term 'generic boot image' may denote an image of a virtual machine or an executable software container (e.g., in the sense of a Docker container) that may be provided by a party not using the boot image itself. E.g., a development team in an enterprise or a software house may provide the boot image for general use, e.g., after a download from a software repository. I.e., each user may download the same generic boot image which may get personalized during or after an instantiation of the generic boot image.
The term 'metadata' may denote - in the classical sense, information about data - here, in particular, data required to start a virtual machine. In a confidential computing environment, such information may be used by the trusted firmware in order to start a secure virtual machine, like, e.g., may contain integrity measures of an image of a secure guest or keys needed to decrypt the image of a secure guest. These metadata may, e.g., comprise resources required, interfaces required, performance required and - in some cases - also which security measures are appropriate. The extension of the metadata - e.g., in terms of the required binding information - but more specifically, in terms of the secret and secret name pair - to be used by the trusted firmware represents one of the foundations of the proposed concept.
The term 'personalizing' may denote here that a generic boot image may be changed in a way that it may lose its status as being generic, i.e., it may become a special or even unique executable image, e.g., by adding a (TLS/ssh) signing key and/or an (volume) encryption/decryption key, by limiting its capabilities by binding it to a special user (e.g., by setting passwords) or specific hardware, or the like.
The term 'trusted firmware' (trusted FW or TFW) may denote a component deeply embedded into the hardware of the computing (mainframe) system which may not be accessed by any other user-controlled software. The trusted firmware may have predefined and highly secured application programming interfaces in order to protect - in a broad sense - the functioning of the trusted firmware. The trusted FW should more be seen as a deeply integrated component of the computer system instead of a service component. Communication channels to/from the trusted firmware are typically cryptographically protected.
The term request structure' may denote a data structure comprising data elements - in particular, encrypted data elements - to be sent by a secure guest instance to a trusted firmware of a computer system. The request structure may, e.g., comprise a new data element to be added to the metadata maintained by the trusted firmware for the specific secure guest.
The term 'modifying the metadata' may denote that new metadata may be added to the existing ones for a specific secure guest image or that existing metadata may be modified. The respective request may comprise the instructions how to modify the metadata.
The term 'retrievable secret' may denote a data item which may be stored in the metadata belonging to a secure guest image. Often, this data item may be associated with some kind of reference (index or name). This data item may be added to the metadata by a request structure submitted (or passed) by the guest to the trusted FW. A retrievable secret can be retrieved (i.e., loaded into the secure guest) as the result of the secure guest issuing a function call to the trusted firmware to retrieve a secret that may be referred to by a reference to the secret. The retrieved secret may be in a format that does not disclose the plaintext value of the secret (e.g., as an IBM Z CPACF protected key).
The term 'secret object' may denote any data item in the sense that it may only be made available to predetermined constituents.
The term 'integrity protected' may denote that it is possible to verify a validity of a data structure of a predefined form. Thereby, data comprised in the data structure itself may be used to confirm a validity of the complete data structure. For this, a measurement value - e.g., the total number of bytes, cryptographic hashes, message authentication codes or signatures of the data structure - e.g., a boot image of a virtual machine - or a UUID of the data structure may be used.
The term 'image measurement value' may denote the measurement value mentioned in the paragraph just above.
The term 'universal unique identifier' (UUID) may denote the known 128-bit label to uniquely identify resource in computer systems.
The term 'encrypted data' may denote data that are not available in plaintext but that have been modified using a predefined key. The encrypted data can be made readable in plaintext again after a decryption process.
The term 'extension secret' may denote here a data item selected - e.g., randomly - by a user or a software process. The extension secret may be part of each request structure passed from a secure guest instance (with other words: submitted by the secure guest instance) to the firmware of a computer system.
The term 'integrity check' may denote to ensure that the component - in particular, request structure - may be consistent in itself. For this, typically hash value comparisons, digital signatures or message authentication codes (MACs) may be used.

**In** the following, a detailed description of the figures will be given. All instructions in the figures are schematic. Firstly, a block diagram of an embodiment of the inventive computer-implemented method for personalizing a secure guest instance from a generic boot image using a trusted firmware that maintains metadata of the secure guest instance is given. Afterwards, further embodiments, as well as embodiments of the security system for personalizing a secure guest instance from a generic boot image using a trusted firmware that maintains metadata of the secure guest instance will be described.

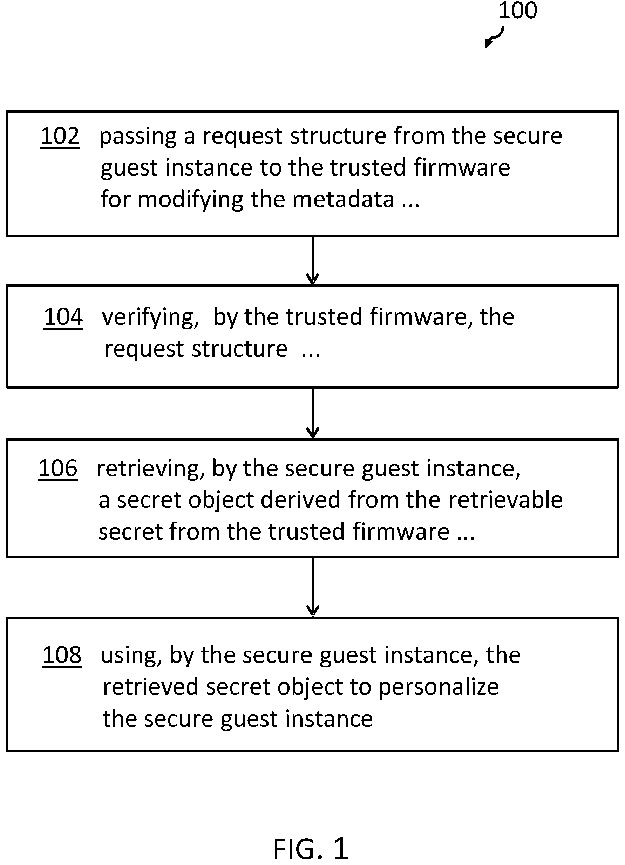

Fig. 1 shows a block diagram of a preferred embodiment of the computer-implemented method 100 for personalizing a secure guest instance from a generic boot image - e.g., provided by a third party, like a software house - using a trusted firmware that maintains metadata of the secure guest instance. The method 100 comprises passing, 102, a request structure from the secure guest instance to the trusted firmware for modifying the metadata of the secure guest instance and to establish at least one retrievable secret in the metadata of the secure guest instance that is specific to the secure guest instance, and verifying, 104, by the trusted firmware, the request structure and upon success modifying the metadata as specified by the request structure. Thereby, the verification comprises an integrity check of the request structure.

Additionally, the method 100 comprises retrieving, 106, by the secure guest instance, e.g., upon request, a secret object derived from the retrievable secret from the trusted firmware. The requested secret can be extracted or derived from the metadata of the secure guest instance. Moreover, the method 100 comprises using, 108, by the secure guest instance, the retrieved secret object to personalize the secure guest instance, i.e., personalizing itself.

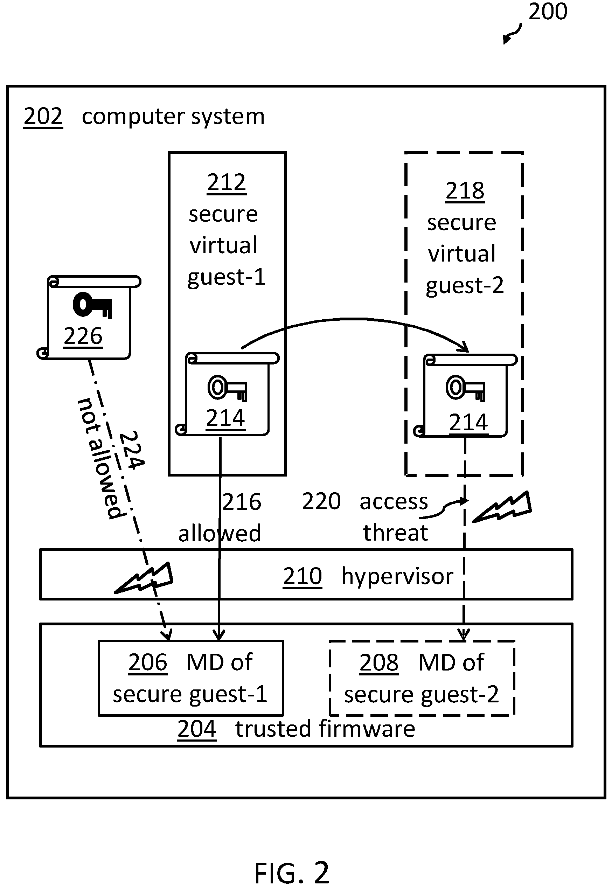

Fig. 2 shows a block diagram 200 of constituents of a scenario of potential security attacks. A computer system 202 comprises trusted firmware 204 on which a hypervisor 210 may be operational in order to execute one or more virtual machines, e.g., secure virtual-guest-1 212 and secure virtual guest-2 218. Secure virtual guest-1 212 can - e.g., via a request structure 214, with or without the support of the hypervisor 210 - access its metadata (MD) 206. This represents an allowed access 216. However, the same request structure 214, potentially with the same key, shall not allow secure virtual guest-2 218 to access other metadata, e.g., the metadata of secure guest-2 208. This must be reliably prohibited because this would represent an access threat 220.

Furthermore, it should also be prohibited (not allowed 224) to access the metadata of secure guest-one 206 using another request structure with another key 226 because this would also constitute unauthorized access 224.

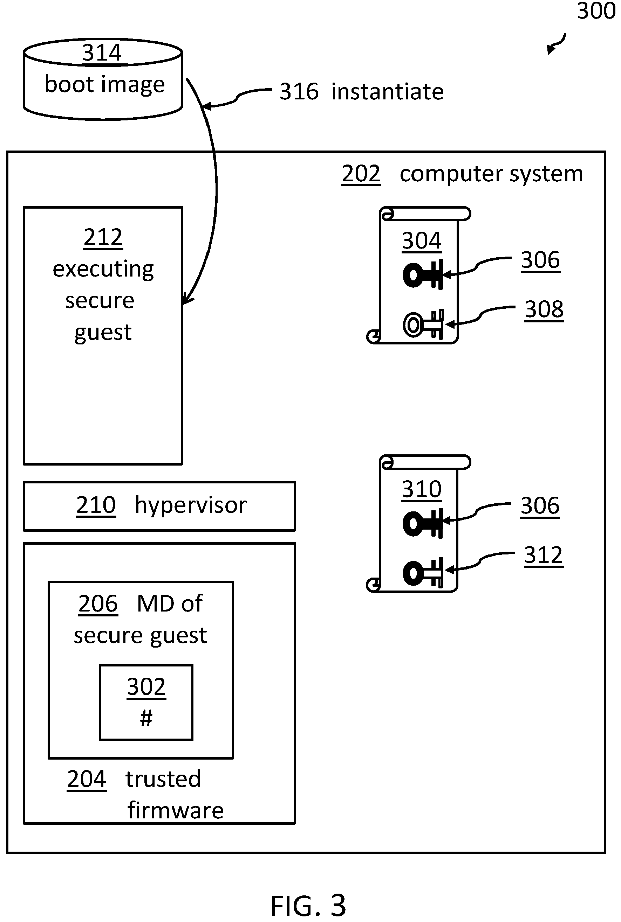

Fig. 3 shows a block diagram of an embodiment 300 comprising components instrumental for the concept proposed here. This figure shows the same computer system 202, trusted firmware 204, metadata of the secure guest 206, the hypervisor 210 and the secure guest 212 as Fig. 2. Thereby, it should be noted that the secure guest is an executing secure guest 212. It may have been created from a boot image 314 by an instantiation 316 to establish the executing secure guest 212 controlled by the hypervisor 210.

Additionally, the request structures 304 and 310 should be noted, as they represent request structures at different points in time. The first request structure 304 can comprise the extension key 306 as well as another protected key 308 which should be integrated into the metadata of secure guest-1 206.

In case another request structure 310 at a later point in time would be passed-over by the executing secure guest 312 to the metadata 206 of that executing secure guest 212, the request would only be accepted by the trusted firmware 204, if the extension key 306 would be identical if compared to the extension key 306 of the first request structure 304. This general approach may be extended to each request structure that would be passed or send to the metadata 206 of the secure guest.

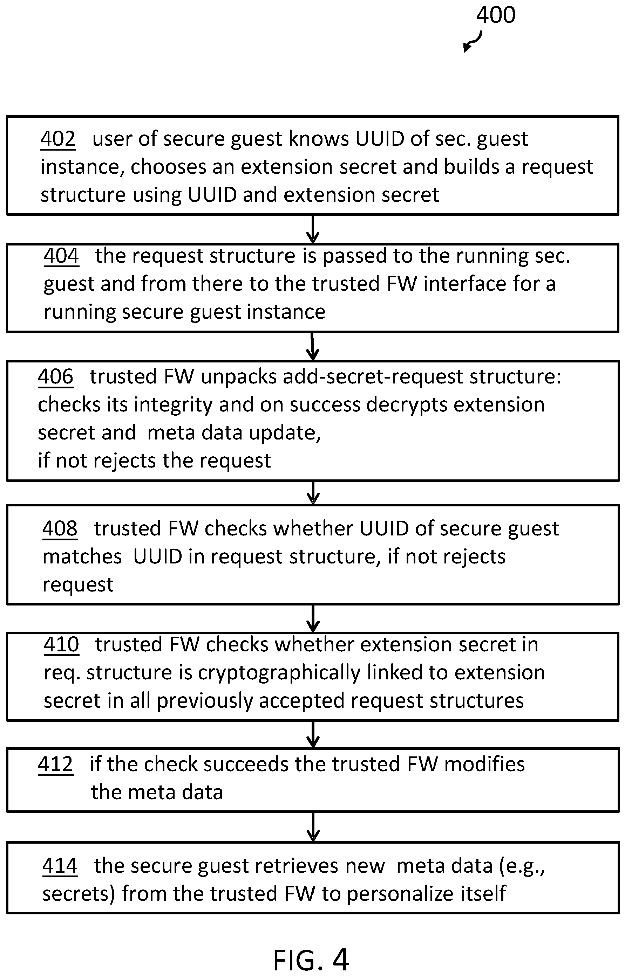

Fig. 4 shows a flowchart 400 of a more implementation-near sequence of activities for the concept proposed here. In one of the initial steps 402, a user of a secure guest knows the UUID of the secure guest instance, chooses an extension secret and builds a request structure using the UUID and the extension secret. Next, the request structure is passed, sent or transmitted, 404 to the running/executing secure guest. From there, a trusted firmware interface for a running secure guest instance comes into play and receives the request structure. This interface may also be instrumental for the next steps.

Then, the trusted firmware unpacks, 406, e.g., the received add-secret-request structure (which is a special form of the request structure) and checks its integrity. On success, the trusted firmware or subcomponent thereof decrypts the extension secret and the data for the metadata update. Otherwise, the request is rejected.

One of the options to check the integrity of the request structure would be that the trusted firmware checks, 408, whether the UUID value of the secure guest matches the UUID value in the request structure. If that is not the case, the request is rejected.

In a next security enhancing step, the trusted firmware checks, 410, whether the extension secret in the request structure is cryptographically linked to the extension secret of all previously accepted request structures from the same secure guest instance. The request would be rejected if this condition would not be met. However, if the check succeeds, the trusted firmware modifies, 412, the metadata as instructed by the request structure.

This can be seen as a prerequisite that the secure guest can retrieve the new metadata - e.g., in form of additional secrets - at a later point in time from the trusted firmware in order to personalize itself, 414.

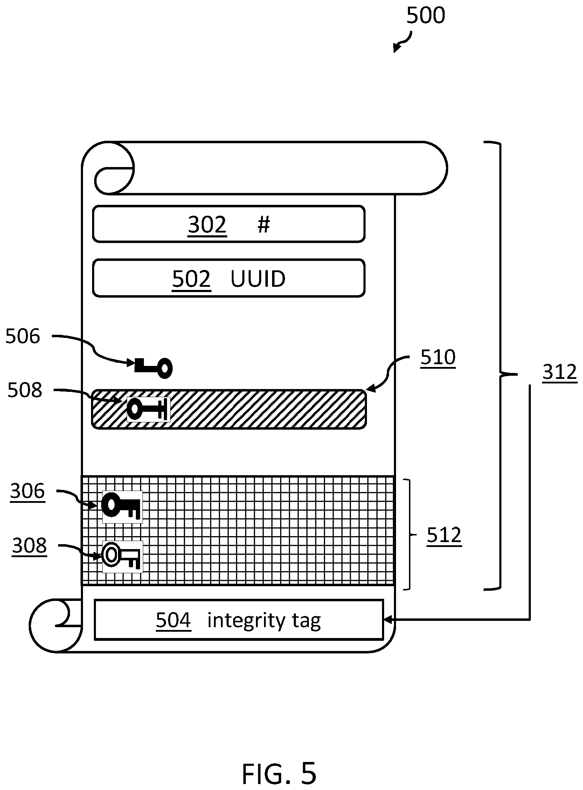

Fig. 5 shows an embodiment of a data structure 500 in form of the add-secret-request structure according to an embodiment. In order to support integrity checks of the request structure 500, the request structure can comprise one or more measurement values 302 of the generic image or of the executing secure guest instance. In addition or alternatively, the request structure 500 can also comprise a UUID 502 of the executing secure guest instance for which the request structure is intended. The request structure may contain an ephemeral public key 506 (e.g., a DH, or ECDH key). Furthermore, also a request structure protecting key (RPK) 508 can protect the request structure itself or parts thereof. Before accessing the key 508, the trusted firmware would have to decrypt the encryption 510 of the key 508.

Using a private key exclusively accessible by the trusted firmware and possibly the public key 506 (use DH, ECDH scheme with 506, use RSA scheme without 506) while compute a key that can be used to decrypt the encryption 510 of the key 508. The key 508 can then be used to both, (i) verifying the integrity of the request structure 500 and (ii) decrypting the encrypted part 512 of the request structure 500. The combined verification and encryption operation can be an authenticated encryption with additional data (AEAD) cipher (e.g., AES-GCM). The verification succeeds if the verification algorithm computes the same value that is stored in the last part 504 of the request structure 500.

It may also be noted that the substructure 312 of the request structure, which can be protected by the request protecting key RPK, corresponds to an integrity tag field of the request structure. This tag can be a digital signature or the result of an HMAC (Hash-Based Message Authentication Code) computation or the integrity tag computed by an AEAD (Authenticated Encryption with Associated Data) operation like AES-GCM (Advanced Encryption Standard - Galois/Counter Mode).

Furthermore, the request structure 500 comprises a part 512 in which keys should be kept in encrypted form, in particular encrypted by the RPK which is only accessible by the trusted firmware. This may, e.g., be the extension secret 306, as well as the data 308 representing metadata modifications (e.g., a new secret to be stored under the control of the firmware). It should also be noted that the RPK is only accessible by the trusted firmware and may be used to communicate to the trusted firmware inside the request via "key slots" that can only be interpreted with the help of the private host key which is also only accessible by the trusted firmware.

Additionally, the structure 510 represents one of a plurality of key slots - in particular, one for each target host - comprising a hash value of a public host key and RPK encrypted using public host and private customer keys. Thereby, the public host key(s) is not explicitly shown.

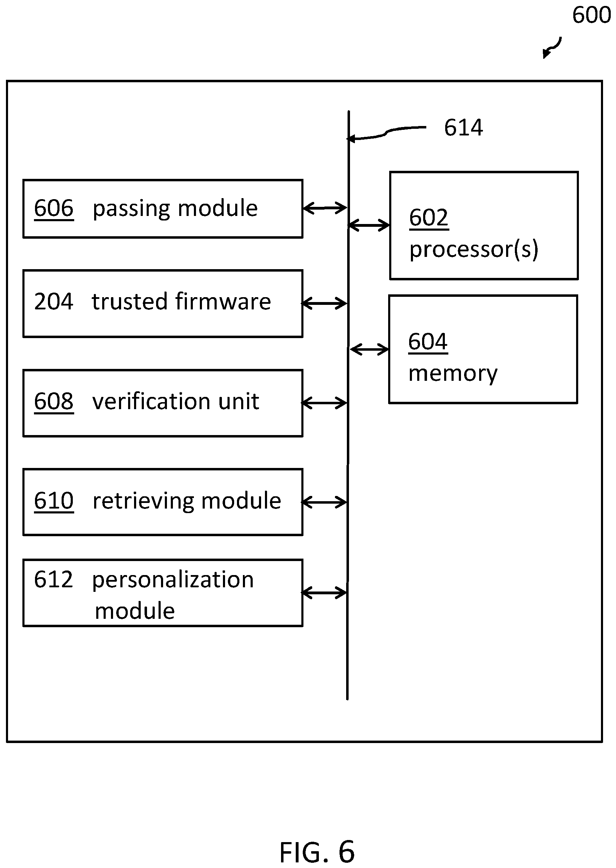

Fig. 6 shows a block diagram of an embodiment of the security system 600 for personalizing a secure guest instance from a generic boot image using a trusted firmware 204 that maintains metadata of the secure guest instance. The system 600 comprises one or more processors 602 and a memory 600 for operatively coupled to the one or more processors 602, wherein the memory 600 for stored program code portions (not shown) which, when executed by the one or more processors 602, enable the one or more processors 602 to pass - in particular by a sending or passing module 606 - a request structure from the secure guest instance to the trusted firmware for modifying the metadata of the secure guest instance and to establish at least one retrievable secret in the metadata of the secure guest instance that is specific to the secure guest instance.

The system 600 and also a verification unit 608 adapted for verifying, by or in combination with the trusted firmware, the request structure and upon success modifying the metadata as specified by the request structure.

Additionally, the one or more processors 602 are also unable to retrieve - in particular by the retrieving module 610, possibly in cooperation with the secure guest instance - use a secret object derived from the retrievable secret from the trusted firmware.

Last but not least, the system 600 can comprise a personalization module 612 such that the one or more processors 602 - potentially in cooperation with the secure guest instance - use the retrieved secret object to personalize the secure guest instance.

It shall also be mentioned that all functional units, modules and functional blocks - in particular, the one or more processors 602, the memory 604, and the passing module 606, the trusted firmware 204, the verification unit 608, the retrieving module 610 and the personalization module 612 - may be communicatively coupled to each other for signal or message exchange in a selected 1:1 manner. Alternatively the functional units, modules and functional blocks can be linked to a system internal bus system 614 for a selective signal or message exchange.

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

A computer program product embodiment (CPP embodiment or CPP) is a term used in the present disclosure to describe any set of one, or more, storage media (also called mediums) collectively included in a set of one, or more, storage devices that collectively include machine readable code corresponding to instructions and/or data for performing computer operations specified in a given CPP claim. A storage device is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include diskette, hard disk, random access memory (RAM), read - only memory (ROM), erasable programmable read - only memory (EPROM or Flash memory), static random access memory (SRAM), compact disc read - only memory (CD - ROM), digital versatile disk (DVD), memory stick, floppy disk, mechanically encoded device (such as punch cards or pits / lands formed in a major surface of a disc) or any suitable combination of the foregoing. A computer readable storage medium, as that term is used in the present disclosure, is not to be construed as storage in the form of transitory signals per se, such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de - fragmentation or garbage collection, but this does not render the storage device as transitory because the data is not transitory while it is stored.

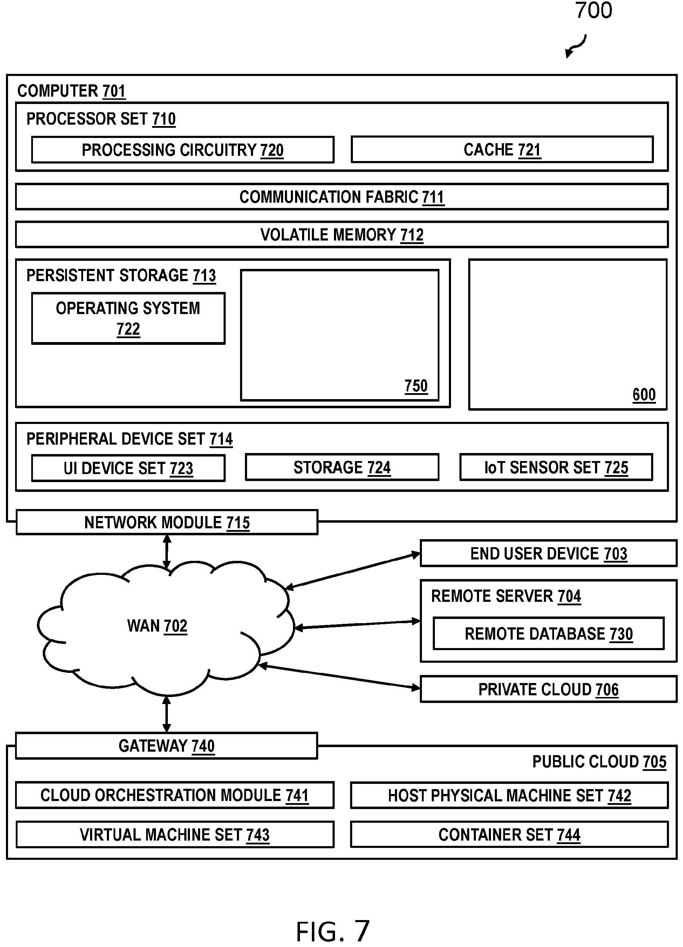

Fig. 7 shows a computing environment 700 comprising an example of an environment for the execution of at least some of the computer code involved in performing the inventive methods, such as the computer-implemented method for personalizing a secure guest instance from a generic boot image using a trusted firmware that maintains metadata of the secure guest instance 750.

In addition to block 750, computing environment 700 includes, for example, computer 701, wide area network (WAN) 702, end user device (EUD) 703, remote server 704, public cloud 705, and private cloud 706. In this embodiment, computer 701 includes processor set 710 (including processing circuitry 720 and cache 721), communication fabric 711, volatile memory 712, persistent storage 713 (including operating system 722 and block 750, as identified above), peripheral device set 714 (including user interface (UI), device set 723, storage 724, and Internet of Things (IoT) sensor set 725), and network module 715. Remote server 704 includes remote database 730. Public cloud 705 includes gateway 740, cloud orchestration module 741, host physical machine set 742, virtual machine set 743, and container set 744.

COMPUTER 701 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 730. As is well understood in the art of computer technology, and depending upon the technology, performance of a computer - implemented method may be distributed among multiple computers and/or between multiple locations. On the other hand, in this presentation of computing environment 700, detailed discussion is focused on a single computer, specifically computer 701, to keep the presentation as simple as possible. Computer 701 may be located in a cloud, even though it is not shown in a cloud in Figure 7. On the other hand, computer 701 is not required to be in a cloud except to any extent as may be affirmatively indicated.

PROCESSOR SET 710 includes one, or more, computer processors of any type now known or to be developed in the future. Processing circuitry 720 may be distributed over multiple packages, for example, multiple, coordinated integrated circuit chips. Processing circuitry 720 may implement multiple processor threads and/or multiple processor cores. Cache 721 is memory that is located in the processor chip package(s) and is typically used for data or code that should be available for rapid access by the threads or cores running on processor set 710. Cache memories are typically organized into multiple levels depending upon relative proximity to the processing circuitry. Alternatively, some, or all, of the cache for the processor set may be located "off chip." In some computing environments, processor set 710 may be designed for working with qubits and performing quantum computing.

Computer readable program instructions are typically loaded onto computer 701 to cause a series of operational steps to be performed by processor set 710 of computer 701 and thereby effect a computer - implemented method, such that the instructions thus executed will instantiate the methods specified in flowcharts and/or narrative descriptions of computer - implemented methods included in this document (collectively referred to as "the inventive methods"). These computer readable program instructions are stored in various types of computer readable storage media, such as cache 721 and the other storage media discussed below. The program instructions, and associated data, are accessed by processor set 710 to control and direct performance of the inventive methods. In computing environment 700, at least some of the instructions for performing the inventive methods may be stored in block 750 in persistent storage 713.

COMMUNICATION FABRIC 711 is the signal conduction paths that allow the various components of computer 701 to communicate with each other. Typically, this fabric is made of switches and electrically conductive paths, such as the switches and electrically conductive paths that make up busses, bridges, physical input / output ports and the like. Other types of signal communication paths may be used, such as fiber optic communication paths and/or wireless communication paths.

VOLATILE MEMORY 712 is any type of volatile memory now known or to be developed in the future. Examples include dynamic type random access memory (RAM) or static type RAM. Typically, the volatile memory is characterized by random access, but this is not required unless affirmatively indicated. In computer 701, the volatile memory 712 is located in a single package and is internal to computer 701, but, alternatively or additionally, the volatile memory may be distributed over multiple packages and/or located externally with respect to computer 701.

PERSISTENT STORAGE 713 is any form of non-volatile storage for computers that is now known or to be developed in the future. The non-volatility of this storage means that the stored data is maintained regardless of whether power is being supplied to computer 701 and /or directly to persistent storage 713. Persistent storage 713 may be a read only memory (ROM), but typically at least a portion of the persistent storage allows writing of data, deletion of data and re - writing of data. Some familiar forms of persistent storage include magnetic disks and solid-state storage devices. Operating system 722 may take several forms, such as various known proprietary operating systems or open-source Portable Operating System Interface type operating systems that employ a kernel. The code included in block 750 typically includes at least some of the computer code involved in performing the inventive methods.

PERIPHERAL DEVICE SET 714 includes the set of peripheral devices of computer 701. Data communication connections between the peripheral devices and the other components of computer 701 may be implemented in various ways, such as Bluetooth connections, Near-Field Communication (NFC) connections, connections made by cables (such as universal serial bus (USB) type cables), insertion type connections (e.g., secure digital (SD) card), connections made though local area communication networks and even connections made through wide area networks such as the internet. In various embodiments, UI device set 723 may include components such as a display screen, speaker, microphone, wearable devices (such as goggles and smart watches), keyboard, mouse, printer, touchpad, game controllers, and haptic devices. Storage 724 is external storage, such as an external hard drive, or insertable storage, such as an SD card. Storage 724 may be persistent and/or volatile. In some embodiments, storage 724 may take the form of a quantum computing storage device for storing data in the form of qubits. In embodiments where computer 701 is required to have a large amount of storage (for example, where computer 701 locally stores and manages a large database) then this storage may be provided by peripheral storage devices designed for storing very large amounts of data, such as a storage area network (SAN) that is shared by multiple, geographically distributed computers. IoT sensor set 725 is made up of sensors that can be used in Internet of Things applications. For example, one sensor may be a thermometer and another sensor may be a motion detector.

NETWORK MODULE 715 is the collection of computer software, hardware, and firmware that allows computer 701 to communicate with other computers through WAN 702. Network module 715 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 715 are performed on the same physical hardware device. In other embodiments (e.g., embodiments that utilize software - defined networking (SDN)), the control functions and the forwarding functions of network module 715 are performed on physically separate devices, such that the control functions manage several different network hardware devices. Computer readable program instructions for performing the inventive methods can typically be downloaded to computer 701 from an external computer or external storage device through a network adapter card or network interface included in network module 715.

WAN 702 is any wide area network (for example, the internet) capable of communicating computer data over non - local distances by any technology for communicating computer data, now known or to be developed in the future. In some embodiments, the WAN may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

END USER DEVICE (EUD) 703 is any computer system that is used and controlled by an end user (for example, a customer of an enterprise that operates computer 701), and may take any of the forms discussed above in connection with computer 701. EUD 703 typically receives helpful and useful data from the operations of computer 701. For example, in a hypothetical case where computer 701 is designed to provide a recommendation to an end user, this recommendation would typically be communicated from network module 715 of computer 701 through WAN 702 to EUD 703. In this way, EUD 703 can display, or otherwise present, the recommendation to an end user. In some embodiments, EUD 703 may be a client device, such as thin client, heavy client, mainframe computer, desktop computer and so on.

REMOTE SERVER 704 is any computer system that serves at least some data and/or functionality to computer 701. Remote server 704 may be controlled and used by the same entity that operates computer 701. Remote server 704 represents the machine(s) that collect and store helpful and useful data for use by other computers, such as computer 701. For example, in a hypothetical case where computer 701 is designed and programmed to provide a recommendation based on historical data, then this historical data may be provided to computer 701 from remote database 730 of remote server 704.

PUBLIC CLOUD 705 is any computer system available for use by multiple entities that provides on - demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 705 is performed by the computer hardware and/or software of cloud orchestration module 741. The computing resources provided by public cloud 705 are typically implemented by virtual computing environments that run on various computers making up the computers of host physical machine set 742, which is the universe of physical computers in and/or available to public cloud 705. The virtual computing environments (VCEs) typically take the form of virtual machines from virtual machine set 743 and/or containers from container set 744. It is understood that these VCEs may be stored as images and may be transferred among and between the various physical machine hosts, either as images or after instantiation of the VCE. Cloud orchestration module 741 manages the transfer and storage of images, deploys new instantiations of VCEs and manages active instantiations of VCE deployments. Gateway 740 is the collection of computer software, hardware, and firmware that allows public cloud 705 to communicate through WAN 702.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating - system - level virtualization. This refers to an operating system feature in which the kernel allows the existence of multiple isolated user - space instances, called containers. These isolated user - space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

PRIVATE CLOUD 706 is similar to public cloud 705, except that the computing resources are only available for use by a single enterprise. While private cloud 706 is depicted as being in communication with WAN 702, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. **In** this embodiment, public cloud 705 and private cloud 706 are both part of a larger hybrid cloud.

It should also be mentioned that the security system 600 (compare Fig. 6) for personalizing a secure guest instance from a generic boot image using a trusted firmware that maintains metadata of the secure guest instance can be an operational sub-system of the computer 701 and may be attached to a computer-internal bus system.

The terminology used herein is for the purpose of describing particular embodiments only and is not intended to limit the invention. As used herein, the singular forms a, an and the are intended to include the plural forms as well, unless the context clearly indicates otherwise. It will further be understood that the terms comprises and/or comprising, when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or steps plus function elements in the claims below are intended to include any structure, material, or act for performing the function in combination with other claimed elements, as specifically claimed. The description of the present invention has been presented for purposes of illustration and description, but is not intended to be exhaustive or limited to the invention in the form disclosed. Many modifications and variations will be apparent to those of ordinary skills in the art without departing from the scope of the invention. The embodiments are chosen and described in order to best explain the principles of the invention and the practical application, and to enable others of ordinary skills in the art to understand the invention for various embodiments with various modifications, as are suited to the particular use contemplated.

## Claims

1. A computer-implemented method for personalizing a secure guest instance from a generic boot image, using a trusted firmware that maintains metadata of said secure guest instance, said method comprising
- passing a request structure from said secure guest instance to said trusted firmware for modifying said metadata of said secure guest instance and to establish at least one retrievable secret in said metadata of said secure guest instance that is specific to said secure guest instance,
- verifying, by said trusted firmware, said request structure and upon success modifying said metadata as specified by said request structure, and
- retrieving, by said secure guest instance, a secret object derived from said retrievable secret from said trusted firmware and,
- using, by said secure guest instance, said retrieved secret object to personalize said secure guest instance.

2. The method according to claim 1, wherein each request structure is integrity protected such that said integrity of said request structure is verified by said trusted firmware.

3. The method according to claim 1 or 2,
- wherein a request structure comprises an image measurement value of said secure guest passing said request structure, and
- wherein said trusted firmware rejects said passed request structure if said measurement value of a boot image of said secure guest does not match said image measurement value.

4. The method according to one of claims 1 to 3,
- wherein said request structure comprises a universal unique identifier, UUID, of said secure guest, and
- wherein said trusted firmware rejects said request structure if said UUID of said secure guest passing said request structure does not match said UUID in said request structure.

5. The method according to one of claims 1 to 4, wherein said request structure comprises encrypted data that is only decryptable by said trusted firmware.

6. The method according to claim 5,
- wherein encrypted data of said request structure comprises an extension secret, and
- wherein said trusted firmware rejects any request structure received after a first request structure whose extension secret does not match said extension secret of said first request structure received.

7. The method according to claim 5, wherein data of said request structure are encrypted, and wherein said modification of said metadata of said secure guest comprises adding some of said encrypted data as said secret to said metadata.

8. The method according to one of claims 1 to 7, wherein said trusted firmware provides cryptographic functions operating on protected keys, wherein said secret object is a protected key which is only valid for use by said secure guest as arguments to one of said cryptographic functions.

9. The method according to one of claims 1 to 8, wherein said secret comprised in said request structure to be added to said metadata of a secure guest are markable as being retrievable such that said trusted firmware returns a secret object in response to a get-retrievable-secret request issued by a secure guest only if said secret is marked as retrievable.

10. The method according to claim 6,
- wherein in said request structure each retrievable secret is associated with a secret reference, and
- wherein said retrieving said secret object associated with a secret reference from said trusted firmware is enabled by a retrieval interface of said trusted firmware that takes said secret reference as input.

11. The method according to one of claims 1 to 10, wherein a request structure comprises an indication on how to modify said metadata of a secure guest.

12. The method according to one of claims 1 to 11, wherein said metadata comprises controls that determine operations that are executable by said secure guest.

13. The method according to one of claims 1 to 12, also comprising,
- creating said request structure to modify said metadata of said secure guest instance that has been created but not yet started.

14. A security system for personalizing a secure guest instance from a generic boot image using a trusted firmware that maintains metadata of said secure guest instance, said system comprising
- one or more processors and a memory operatively coupled to said one or more processor, wherein said memory stores program code portions which, when executed by said one or more processors, enable said one or more processors to perform a method according to any of the claims 1 to 13.

15. A computer program product for personalizing a secure guest instance from a generic boot image using a trusted firmware that maintains metadata of said secure guest instance, said computer program product comprising a computer readable storage medium having program instructions embodied therewith, said program instructions being executable by one or more computing systems or controllers to cause said one or more computing systems to perform a method according to any of the claims 1 to 13.

## Patentansprüche

1. Computerrealisiertes Verfahren zum Personalisieren einer sicheren Gastinstanz von einem generischen Boot-Image durch Verwenden einer vertrauenswürdigen Firmware, die Metadaten der sicheren Gastinstanz verwaltet, wobei das Verfahren aufweist:
- Weiterleiten einer Anforderungsstruktur von der sicheren Gastinstanz an die vertrauenswürdige Firmware zum Modifizieren der Metadaten der sicheren Gastinstanz und zum Erstellen von mindestens einem abrufbaren Geheimnis in den Metadaten der sicheren Gastinstanz, der für die sichere Gastinstanz spezifisch ist,
- Überprüfen der Anforderungsstruktur durch die vertrauenswürdige Firmware und, bei einem Erfolg, Modifizieren der Metadaten, wie dies durch die Anforderungsstruktur vorgegeben wird, und
- Abrufen eines geheimen Objekts, das von dem abrufbaren Geheimnis von der vertrauenswürdigen Firmware erhalten wird, durch die sichere Gastinstanz, und
- Verwenden des abgerufenen geheimen Objekts durch die sichere Gastinstanz, um die sichere Gastinstanz zu personalisieren.

2. Verfahren nach Anspruch 1, wobei jede Anforderungsstruktur einen Integritätsschutz aufweist, sodass die Integrität der Anforderungsstruktur durch die vertrauenswürdige Firmware überprüft wird.

3. Verfahren nach Anspruch 1 oder 2,
- wobei eine Anforderungsstruktur einen Image-Messwert des sicheren Gasts aufweist, die die Anforderungsstruktur weiterleitet, und
- wobei die vertrauenswürdige Firmware die weitergeleitete Anforderungsstruktur zurückweist, wenn der Messwert eines Boot-Images des sicheren Gasts nicht mit dem Image-Messwert übereinstimmt.

4. Verfahren nach einem der Ansprüche 1 bis 3,
- wobei die Anforderungsstruktur einen universellen eindeutigen Bezeichner, Universal Unique Identifier, UUID, der sicheren Gastinstanz aufweist und
- wobei die vertrauenswürdige Firmware die Anforderungsstruktur zurückweist, wenn der UUID der sicheren Gastinstanz, die die Anforderungsstruktur weiterleitet, nicht mit dem UUID in der Anforderungsstruktur übereinstimmt.

5. Verfahren nach einem der Ansprüche 1 bis 4, wobei die Anforderungsstruktur verschlüsselte Daten aufweist, die nur durch die vertrauenswürdige Firmware entschlüsselbar sind.

6. Verfahren nach Anspruch 5,
- wobei verschlüsselte Daten der Anforderungsstruktur ein Erweiterungsgeheimnis aufweisen und
- wobei die vertrauenswürdige Firmware jede nach einer ersten Anforderungsstruktur empfangene Anforderungsstruktur zurückweist, deren Erweiterungsgeheimnis nicht mit dem Erweiterungsgeheimnis der ersten empfangenen Anforderungsstruktur übereinstimmt.

7. Verfahren nach Anspruch 5, wobei Daten der Anforderungsstruktur verschlüsselt werden und wobei die Modifizierung der Metadaten des sicheren Gasts ein Hinzufügen einiger der verschlüsselten Daten als das Geheimnis zu den Metadaten aufweist.

8. Verfahren nach einem der Ansprüche 1 bis 7, wobei die vertrauenswürdige Firmware kryptografische Funktionen bereitstellt, die für geschützte Schlüssel ausgeführt werden, wobei das geheime Objekt ein geschützter Schlüssel ist, der nur zur Verwendung als Argumente für eine der kryptografischen Funktionen durch den sicheren Gast gültig ist.

9. Verfahren nach einem der Ansprüche 1 bis 8, wobei das in der Anforderungsstruktur enthaltene Geheimnis, das zu den Metadaten eines sicheren Gasts hinzugefügt werden soll, als abrufbar kennzeichenbar ist, sodass die vertrauenswürdige Firmware als Reaktion auf eine Anforderung zum Erhalt eines abrufbaren Geheimnisses, das durch einen sicheren Gast ausgegeben wird, nur dann ein geheimes Objekt zurückgibt, wenn das Geheimnis als abrufbar gekennzeichnet ist.

10. Verfahren nach Anspruch 6,
- wobei in der Anforderungsstruktur jedes abrufbare Geheimnis einer geheimen Referenz zugehörig ist und
- wobei das Abrufen des geheimen Objekts, das einer geheimen Referenz zugehörig ist, von der vertrauenswürdigen Firmware durch eine Abrufschnittstelle der vertrauenswürdigen Firmware ermöglicht wird, die die geheime Referenz als Eingabe verwendet.

11. Verfahren nach einem der Ansprüche 1 bis 10, wobei eine Anforderungsstruktur eine Angabe dazu aufweist, wie die Metadaten eines sicheren Gasts modifiziert werden sollen.

12. Verfahren nach einem der Ansprüche 1 bis 11, wobei die Metadaten Steuerungen aufweisen, die Operationen bestimmen, die durch den sicheren Gast ausführbar sind.

13. Verfahren nach einem der Ansprüche 1 bis 12, des Weiteren aufweisend
- Erzeugen der Anforderungsstruktur, um die Metadaten der sicheren Gastinstanz zu modifizieren, die zwar erzeugt, aber noch nicht gestartet wurde.

14. Sicherheitssystem zum Personalisieren einer sicheren Gastinstanz von einem generischen Boot-Image durch Verwenden einer vertrauenswürdigen Firmware, die Metadaten der sicheren Gastinstanz verwaltet, wobei das Verfahren aufweist:
- einen oder mehrere Prozessoren und einen Arbeitsspeicher, der mit dem einen oder den mehreren Prozessoren verbunden wird, wobei der Arbeitsspeicher Programmcodeteile speichert, die bei Ausführung durch den einen oder die mehreren Prozessoren den einen oder die mehreren Prozessoren in die Lage versetzen, ein Verfahren nach einem beliebigen der Ansprüche 1 bis 13 durchzuführen.

15. Computerprogrammprodukt zum Personalisieren einer sicheren Gastinstanz von einem generischen Boot-Image durch Verwenden einer vertrauenswürdigen Firmware, die Metadaten der sicheren Gastinstanz verwaltet, wobei das Computerprogrammprodukt ein computerlesbares Speichermedium mit darauf enthaltenen Programmanweisungen aufweist, wobei die Programmanweisungen durch ein oder mehrere Computersysteme ausführbar sind, um das eine oder die mehreren Computersysteme dazu zu veranlassen, ein Verfahren nach einem der Ansprüche 1 bis 13 durchzuführen.

## Revendications

1. Procédé mis en œuvre par ordinateur pour personnaliser une instance d'invité sécurisée à partir d'une image d'amorçage générique en utilisant un microprogramme de confiance qui conserve des métadonnées de ladite instance d'invité sécurisée, ledit procédé comprenant
- le passage d'une structure de demande à partir de ladite instance d'invité sécurisée vers ledit microprogramme de confiance afin de modifier lesdites métadonnées de ladite instance d'invité sécurisée et afin d'établir au moins un secret récupérable dans lesdites métadonnées de ladite instance d'invité sécurisée qui est spécifique à ladite instance d'invité sécurisée,
- la vérification, par ledit microprogramme de confiance, de ladite structure de demande et, en cas de succès, la modification des dites métadonnées tel que spécifié par ladite structure de demande, et
- la récupération, par ladite instance d'invité sécurisée, d'un objet secret dérivé dudit secret récupérable à partir dudit microprogramme de confiance, et
- l'utilisation, par ladite instance d'invité sécurisée, dudit objet secret récupéré pour personnaliser ladite instance d'invité sécurisée.

2. Procédé selon la revendication 1, dans lequel chaque structure de demande est protégée dans son intégrité de sorte que ladite intégrité de ladite structure de demande est vérifiée par ledit microprogramme de confiance.

3. Procédé selon la revendication 1 ou 2,
- dans lequel une structure de demande comprend une valeur de mesure d'image dudit passage d'invité sécurisé de ladite structure de demande, et
- dans lequel ledit microprogramme de confiance rejette ladite structure de demande passée si ladite valeur de mesure d'une image d'amorçage dudit invité sécurisé ne correspond pas avec ladite valeur de mesure d'image.

4. Procédé selon l'une des revendications 1 à 3,
- dans lequel ladite structure de demande comprend un identificateur unique universel, UUID, dudit invité sécurisé, et
- dans lequel ledit microprogramme de confiance rejette ladite structure de demande si ledit UUID dudit passage d'invité sécurisé de ladite structure de demande ne correspond pas audit UUID dans ladite structure de demande.

5. Procédé selon l'une des revendications 1 à 4, dans lequel ladite structure de demande comprend des données chiffrées qui sont uniquement déchiffrable par ledit microprogramme de confiance.

6. Procédé selon la revendication 5,
- dans lequel les données chiffrées de ladite structure de demande comprennent un secret d'extension, et
- dans lequel ledit microprogramme de confiance rejette toute structure de demande reçue après une première structure de demande dont le secret d'extension ne correspond pas audit secret d'extension de ladite première structure de demande reçue.

7. Procédé selon la revendication 5, dans lequel des données de ladite structure de demande sont chiffrées, et dans lequel ladite modification des dites métadonnées dudit invité sécurisé comprend l'addition de quelques-unes des dites données chiffrées en tant que ledit secret aux dites métadonnées.

8. Procédé selon l'une des revendications 1 à 7, dans lequel ledit microprogramme de confiance fournit des fonctions cryptographiques fonctionnant sur des clés protégées, dans lequel ledit objet secret est une clé protégée qui est uniquement valide pour être utilisée par ledit invité sécurisé en tant qu'argument vers l'une des dites fonctions cryptographiques.

9. Procédé selon l'une des revendications 1 à 8, dans lequel ledit secret compris dans ladite structure de demande devant être ajouté aux dites métadonnées d'un invité sécurisé peut être marqué comme étant récupérable de sorte que ledit microprogramme de confiance retourne un objet secret en réponse à une demande de secret récupérable obtenue émise par un invité sécurisé uniquement si ledit secret est marqué comme étant récupérable.

10. Procédé selon la revendication 6,
- dans lequel dans ladite structure de demande chaque secret récupérable est associé à une référence de secret, et
- dans lequel ladite récupération dudit objet secret associé avec une référence de secret à partit dudit microprogramme de confiance est désactivée par une interface de récupération dudit microprogramme de confiance qui prend ladite référence de secret en tant qu'entrée.

11. Procédé selon l'une des revendications 1 à 10, dans lequel une structure de demande comprend une indication de la manière comment modifier lesdites métadonnées d'un invité sécurisé.

12. Procédé selon l'une des revendications 1 à 11, dans lequel lesdites métadonnées comprennent des commandes qui déterminent des opérations qui sont exécutables par ledit invité sécurisé.

13. Procédé selon l'une des revendications 1 à 12, comprenant également,
- la création de ladite structure de demande pour modifier lesdites métadonnées de ladite instance d'invité sécurisée qui a été créée mais non encore démarrée.

14. Système de sécurité pour personnaliser une instance d'invité sécurisée à partir d'une image d'amorçage générique en utilisant un microprogramme de confiance qui conserve des métadonnées de ladite instance d'invité sécurisée, ledit système comprenant
- un ou plusieurs processeurs et une mémoire couplés de manière opérationnelle audits un ou plusieurs processeurs, dans lequel ladite mémoire stocke des parties de code de programme qui, lorsqu'elles sont exécutées par ledit processeur ou lesdits processeurs, désactivent ledit processeur ou lesdits processeurs pour exécuter un procédé selon l'une quelconque des revendications 1 à 13.

15. Produit-programme informatique pour personnaliser une instance d'invité sécurisée à partir d'une image d'amorçage générique en utilisant un microprogramme de confiance qui conserve des métadonnées de ladite instance d'invité sécurisée, ledit produit-programme informatique comprenant un milieu de stockage lisible par ordinateur ayant des instructions de programme y étant incorporées, lesdites instructions de programme étant exécutables par un ou plusieurs systèmes informatiques ou contrôleurs pour faire en sorte que ledit ou lesdits systèmes informatiques exécutent un procédé selon l'une quelconque des revendications 1 à 13.
